# EUROPEAN PATENT APPLICATION

(11) **EP 1 874 034 A2**
(43) Date of publication of application: **02.01.2008**
(21) Application number: 07110864.1
(22) Date of filing: 22.06.2007
(51) Int. Cl.: H04N 1/40

(54) **Apparatus and method of recovering high pixel image**

(30) Priority: 26.06.2006 KR 20060057660; 27.10.2006 KR 20060105348
(71) Applicant: Samsung Electro-Mechanics Co., Ltd., Suwon-si, Gyunggi-do (KR)
(72) Inventor: Sung, Gee-young c/o Samsung Advanced Institute of Technology, Gyeonggi-do (KR); Park, Du-sik c/o Samsung Advanced Institute of Technology, Gyeonggi-do (KR); Kim, Chang-yeong c/o Samsung Advanced Institute of Technology, Gyeonggi-do (KR); Lee, Ho-young c/o Samsung Advanced Institute of Technology, Gyeonggi-do (KR)
(74) Representative: Grünecker, Kinkeldey, Stockmair & Schwanhäusser Anwaltssozietät

(57) **Abstract**

An apparatus and method of recovering a high pixel image are provided. The apparatus includes a camera module including a plurality of lenses, and a plurality of sub image sensors corresponding to the plurality of lenses, the plurality of sub image sensors each including a color filter having a single color, an original image generation module receiving a plurality of original color-separated images, an intermediate image generation module rearranging pixel information of pixels at identical positions at the plurality of original color-separated images provided from the original image generation module and generating an intermediate image having a higher resolution than each of the original color-separated images, and a final image generation module performing demosaicing on the intermediate image, performing deblurring on the demosaiced intermediate image, and generating a final image.

## Description

### CROSS-REFERENCE TO RELATED APPLICATIONS

This application claims priority from Korean Patent Application Nos. 10-2006-0057660 and 10-2006-0105348 filed on June 26, 2006 and October 27, 2006 respectively, in the Korean Intellectual Property Office, the disclosures of which are incorporated herein by reference in their entireties.

### BACKGROUND OF THE INVENTION

### 1. Field of the Invention

The present invention relates to an apparatus and method of recovering a high pixel image, and more particularly, to an apparatus and method of recovering a high pixel image from an image obtained through a miniaturized camera module mounted in a small-sized digital device such as a mobile phone, a personal digital assistant (PDA), a MP3 player, or the like.

### 2. Description of the Related Art

Like most digital devices, a digital camera has opened a new world to many people. As an alternative to a conventional, film-based camera, the digital camera is advantageous in that with simple manipulation, an ordinary user can take photos comparable to those of a professional photographer and, a taken photo can be viewed immediately after capture without development and printing. Moreover, since the digital camera records captured images as digital files in a memory of the camera, the taken photo with high picture quality can be uploaded as permanent or semi-permanent digital image files to a personal computer (PC), for example, for storage, image processing, and/or printing at any time when necessary.

In addition, digital cameras have been miniaturized and have become more portable, so they can now be embedded in small-sized digital devices, such as mobile phones, personal digital assistants (PDA), and MP3 players. As a result, taking a photo and enjoying the photo has become a part of everyday affairs, and whether or not a digital camera is embedded in a small-sized digital device has become an important factor in buying the digital device.

Recently, digital devices have become more miniaturized and in addition to demanding personalized devices and convenience, consumers have been demanding smaller and slimmer digital device products.

Accordingly, it is apparent that in order to make a small-sized digital device with an embedded digital camera smaller and slimmer, the embedded digital camera itself should be made smaller and slimmer.

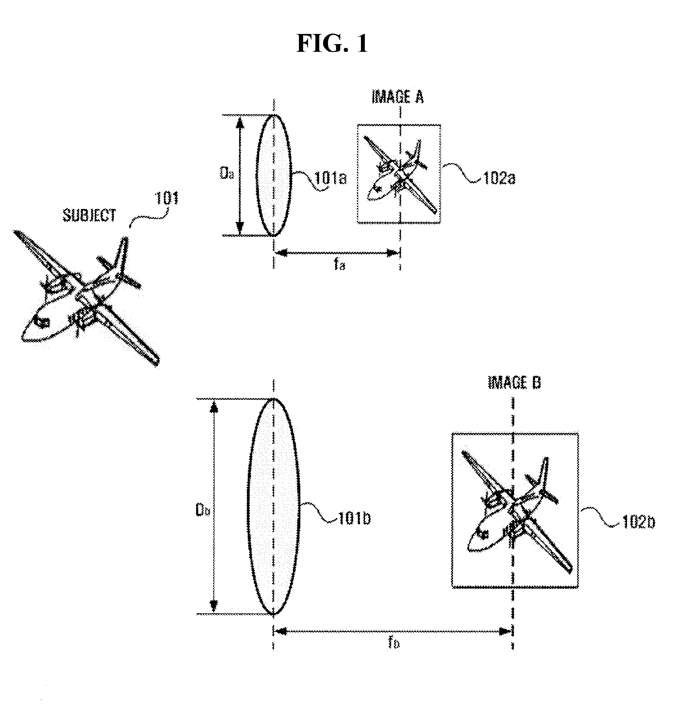

FIG. 1 schematically illustrates an operating principle of a digital camera incorporated in a conventional small-sized camera module.

Referring to FIG. 1, images of a predetermined subject 101 photographed by a user through a lens 101 a having a diameter Dₐ, and a lens 101b having a diameter D_{b}, are formed on image sensors 102a and 102b as images A and B, respectively.

Although the lens 101 b having a relatively large diameter D_{b} is advantageous in terms of the resolution, it may present a problem in that a camera module incorporated in a small digital device becomes bulky due to the relatively long focal length f_{b}, which is an undesirable feature in mounting the camera module into the small digital device. That is, a large lens size and a long focal length make it difficult to achieve miniaturized, slim digital cameras.

Conversely, the lens 101a having a relatively small diameter Dₐ has a short focal length fₐ to form the image A of the subject 101. Accordingly, though the camera module can be miniaturized, an image with a high resolution, which is one of the most important features in a digital camera, cannot be attained. Such a camera module cannot completely satisfy consumers' need for high resolution pictures.

In order to solve such problems, many inventions, for example, Korean Patent Laid-Open Application No. 2003-0084343, have been suggested, but the problems have not been solved yet.

### SUMMARY OF THE INVENTION

Accordingly, it is an aspect of the present invention to provide an apparatus and method of recovering a high pixel image, which can achieve a small-sized digital device by reducing the size of a digital camera mounted in the small-sized digital device.

It is another aspect of the present invention to provide an apparatus and method of recovering a high pixel image, which can reduce the size of a digital camera mounted in the small-sized digital device.

It is still another aspect of the present invention to provide an apparatus and method of recovering a high pixel image, which can easily correct optical misalignment and non-uniformity in sensitivity in representing the high-pixel image.

It is still another aspect of the present invention to provide an apparatus and method of recovering a high pixel image, which can implement high-sensitivity and low-sensitivity image sensing at the same time even without changing the structure of an image sensor unit by using a color filter having different transmittances.

It is still another aspect of the present invention to provide an apparatus and method of recovering a high pixel image, in a digital camera module having a built-in digital camera, in which a greater number of options are available when designing a small-sized digital device in which the digital camera is mounted.

Additional aspects and/or advantages of the invention will be set forth in part in the description which follows and, in part, will be apparent from the description, or may be learned by practice of the invention.

Accordingly, it is an aspect of the present invention to provide an apparatus to recover a high pixel image, including a camera module including a plurality of lenses, and a plurality of sub image sensors corresponding to the plurality of lenses, the plurality of sub image sensors each including a color filter having a single color, an original image generation module receiving a plurality of original color-separated images, an intermediate image generation module rearranging pixel information of pixels at identical positions at the plurality of original color-separated images provided from the original image generation module and generating an intermediate image having a higher resolution than each of the original color-separated images, and a final image generation module performing demosaicing on the intermediate image, performing deblurring on the demosaiced intermediate image, and generating a final image.

According to another aspect of the present invention, there is provided an apparatus to restore a high pixel image including a camera module including a plurality of lenses, and a plurality of sub image sensors corresponding to the plurality of lenses, each of the plurality of sub image sensors comprising a color filter, the color filter separated into a plurality of color areas having different colors, an original image generation module dividing a plurality of original color-separated images into a plurality of pixel groups, an intermediate image generation module mapping pixel information of pixels at identical positions in the plurality of original color-separated images divided into the plurality of pixel groups onto respective pixels of the pixel group corresponding to the identical positions and generating an intermediate image having a higher resolution than each of the original color-separated images, and a final image generation module recovering the intermediate image using a predetermined interpolation algorithm, performing deblurring on the received intermediate image, and generating a final image.

According to still another aspect of the present invention, there is provided an apparatus to restore a high pixel image including a camera module including a plurality of color lenses, and a plurality of sub image sensors corresponding to the plurality of color lenses, wherein each of the plurality of color lenses has a single color and a plurality of original color-separated images are obtained through the plurality of sub image sensors, an original image generation module receiving the plurality of original color-separated images, an intermediate image generation module rearranging pixel information of pixels at identical positions at the plurality of original color-separated images provided from the original image generation module and generating an intermediate image having a higher resolution than each of the original color-separated images, and a final image generation module performing demosaicing on the intermediate image, performing deblurring on the demosaiced intermediate image, and generating a final image.

According to a further aspect of the present invention, there is provided an apparatus to restore a high pixel image including a camera module including a plurality of color lenses, and a plurality of sub image sensors corresponding to the plurality of color lenses, wherein each of the plurality of color lenses has a single color and a plurality of original color-separated images are obtained through the plurality of sub image sensors, an original image generation module dividing the plurality of original color-separated images into a plurality of pixel groups, an intermediate image generation module mapping pixel information of pixels at identical positions in the plurality of original color-separated images divided into the plurality of pixel groups onto respective pixels of the pixel group corresponding to the identical positions and generating an intermediate image, and a final image generation module recovering the intermediate image using a predetermined interpolation algorithm, performing deblurring on the recovered intermediate image, and generating a final image.

According to yet another aspect of the present invention, there is provided a method of restoring a high pixel image in a camera module including a plurality of lenses each including a color filter having a single color, and a plurality of sub image sensors corresponding to the plurality of lenses, the method including obtaining a plurality of original images through each of the plurality of sub image sensors, receiving the plurality of original color-separated images, rearranging pixel information of pixels at identical positions at the plurality of original color-separated images provided from an original image generation module of the camera module and generating an intermediate image having a higher resolution than each of the original color-separated images, and performing demosaicing on the intermediate image, performing deblurring on the demosaiced intermediate image, and generating a final image from the deblurred image.

According to still another aspect of the present invention, there is provided a method of restoring a high pixel image in a camera module including a plurality of lenses each including a color filter having a single color, and a plurality of sub image sensors corresponding to the plurality of lenses, the method including obtaining a plurality of original color-separated images through each of the plurality of sub image sensors, dividing the obtained plurality of original color-separated images into a plurality of pixel groups, mapping pixel information of pixels at identical positions in the plurality of original color-separated images divided into the plurality of pixel groups onto respective pixels of the pixel group corresponding to the identical positions and generating an intermediate image, and recovering the intermediate image using a predetermined interpolation algorithm, performing deblurring on the interpolated intermediate image, and generating a final image from the deblurred image.

According to another aspect of the present invention, there is provided a method of restoring a high pixel image in a camera module including a plurality of color lenses each including a color filter having a single color, and a plurality of sub image sensors corresponding to the plurality of color lenses, the method including obtaining a plurality of original color-separated images through each of the plurality of sub image sensors, receiving the plurality of original color-separated images, rearranging pixel information of pixels at identical positions at the plurality of original color-separated images provided from an original image generation module of the camera module and generating an intermediate image having a higher resolution than each of the original color-separated images, and performing demosaicing on the intermediate image, performing deblurring on the demosaiced intermediate image, and generating a final image from the deblurred image.

According to yet another aspect of the present invention, there is provided a method of restoring a high pixel image in a camera module including a plurality of color lenses, and a plurality of sub image sensors corresponding to the plurality of color lenses, each having a single color, the method including obtaining a plurality of original color-separated images through the plurality of sub image sensors, dividing the plurality of original color-separated images into a plurality of pixel groups, mapping pixel information of pixels at identical positions in the plurality of original color-separated images divided into the plurality of pixel groups onto respective pixels of the pixel group corresponding to the identical positions and generating an intermediate image, and recovering the intermediate image using a predetermined interpolation algorithm, performing deblurring on the interpolated intermediate image, and generating a final image.

### BRIEF DESCRIPTION OF THE DRAWINGS

The above and other features and advantages of the present invention will become more apparent by describing in detail preferred embodiments thereof with reference to the attached drawings in which:
FIG. 1 is a view illustrating an operation principle of a digital camera mounted in a conventional small digital device;
FIG. 2A is a view illustrating a basic structure of a conventional digital camera;
FIG. 2B is a sectional view of a unit pixel forming an image sensor unit shown in FIG. 2A;
FIG. 3 is a block diagram of an apparatus (300) of recovering a high pixel image according to an embodiment of the present invention;
FIGS. 4A and 4B are diagrams illustrating a structure of a digital camera module according to an embodiment of the present invention;
FIG. 4C is a sectional view of a unit pixel forming an image sensor unit shown in FIG. 4A;
FIGS. 5A and 5B are diagrams illustrating a color filter coating method according to an embodiment of the present invention;
FIG. 6 is a diagram illustrating a process in which an original image generation module corrects misalignment in positions and non-uniformity in sensitivity of original images according to an embodiment of the invention;
FIGS. 7A and 7B are diagrams illustrating a process of generating intermediate images according to an embodiment of the present invention;
FIG. 8 is a diagram illustrating a process in which an image generation module recovers a high pixel image according to an embodiment of the present invention;
FIG. 9 is diagram illustrating a structure of a digital camera module according to an embodiment of the present invention;
FIG. 10 is a flow diagram illustrating a method of recovering a high pixel image using a first image generation module shown in FIG. 7B with the camera module having the structure illustrated in FIG. 4A; and
FIG. 11 is a flow diagram illustrating a method of recovering a high pixel image using a second image generation module shown in FIG. 8 with the camera module having the structure illustrated in FIG. 4A.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

In general, the performance of a digital camera can be determined by a number of unit pixels because the greater the number of unit pixels, the clearer and cleaner the obtained image.

In addition to the number of unit pixels, a light intensity of a camera lens may also contribute to the performance of a digital camera. The light intensity of the camera lens is called an F number or an iris value. The F number, which is an expression of a quantity of light per unit area that arrives at an image sensor of the digital camera, is obtained by dividing the focal length f by the diameter D of a lens, i.e., f/D. The bigger the F number, the less the quantity of light per unit area that arrives at the image sensor of the digital camera. The smaller the F number, the greater the quantity of light per unit area that arrives at the image sensor, thereby obtaining a bright image with a high resolution. As described above, the F number is closely related to the resolution of the obtained image as well as the quantity of light per unit area that arrives at the image sensor of the digital camera.

Suppose that two digital cameras having different lens sizes, focal lengths and unit pixels have the same F number. Since the quantities of light per unit area that arrive at the respective image sensors of the two digital cameras are the same, the images obtained from the respective digital cameras will have the same light intensity.

Based on the above principle, the embodiments of the present invention propose a method of recovering a high pixel image, which can be applied to a digital camera module having a plurality of lenses capable of displaying a high-pixel image while reducing a lens diameter and a focal length.

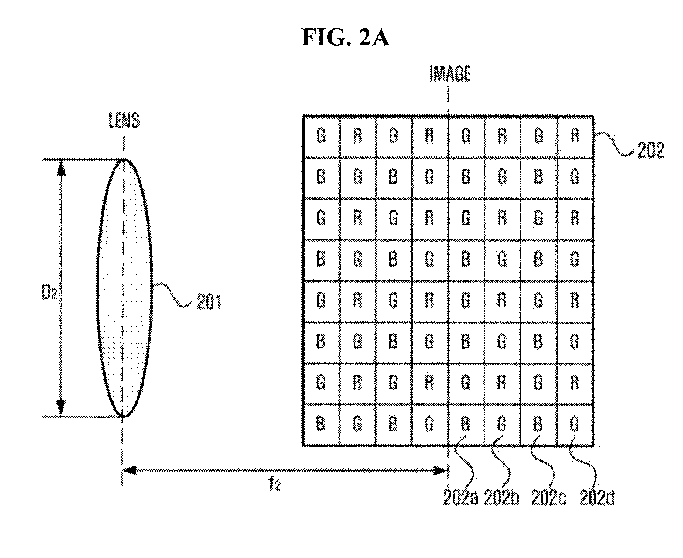

FIG. 2A is a view illustrating a basic structure of a conventional digital camera. Referring to FIG. 2A, the conventional digital camera basically includes a lens 201 having a diameter D₂ within which light reflected from a predetermined object is concentrated, and an image sensor 202 generating an electric image signal corresponding to pixel levels in response to the light concentrated by the lens 201. The focal length of the lens 201 is also illustrated.

A color filter array known as a Bayer pattern is included in the image sensor 202 to implement light received at the lens 201 as an original full-color image. A top view of the image sensor 202 is shown in FIG. 2A.

The Bayer pattern stems from the principle that a digital image is unavoidably implemented by points even though an image actually existing in the natural world is not constituted by points.

To form a digital image constituted by points, luminance (or brightness) and chrominance (or color) components are collected and points receiving each luminance of red (R), green (G) and blue (B) color components are distributed on a two-dimensional plane.

In the array of the Bayer pattern, a G color component, which is the most sensitive to the human eye, is constitutes 50%, and R and B color components each constitute 25%, thereby forming a two-dimensional matrix, which is called a Bayer pattern color filter.

The Bayer pattern color filter recognizes only a color component allocated thereto, rather than full-color components, among the respective R, G and B color components forming the matrix, and unrecognized color components are interpolated for reproduction of full-color components.

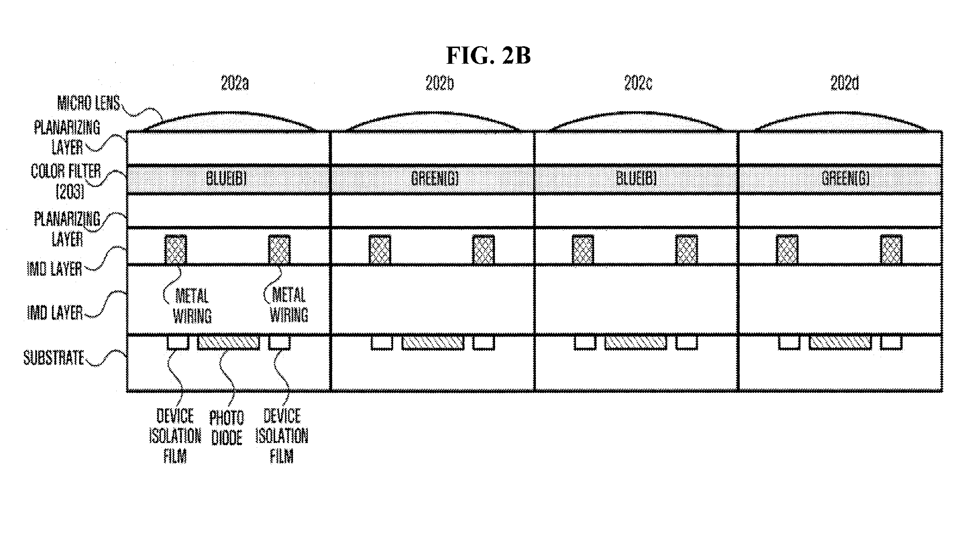

FIG. 2B is a sectional view of unit pixels used to form the image sensor of FIG. 2A.

Referring to FIG. 2B illustrating parts of the unit pixels 202a through 202d to form the image sensor (202 of FIG. 2A), a Bayer pattern color filter 203 is included in the image sensor 202. Other features of the conventional apparatus are illustrated in Fig. 2B, but will not be discussed herein, as such a discussion is not necessary for the understanding of the present application.

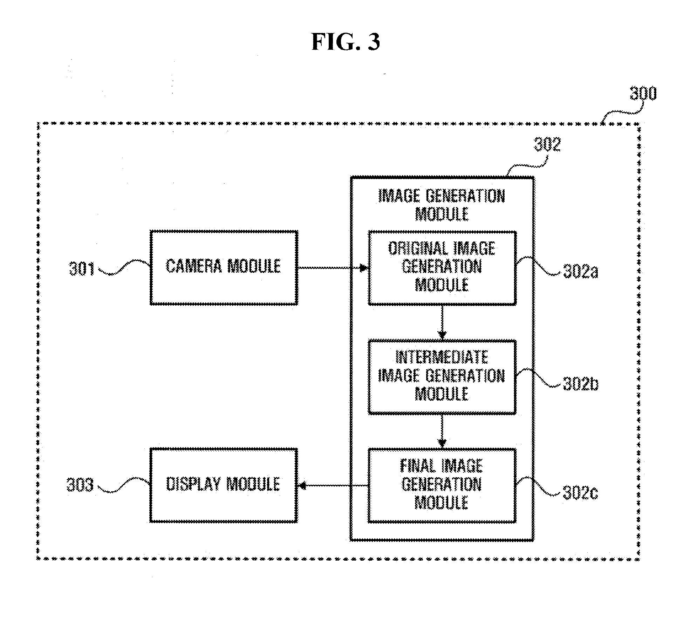

FIG. 3 is a block diagram of an apparatus 300 recovering a high pixel image according to an embodiment of the present invention.

The apparatus 300 is composed of a camera module 301 concentrating incident light and generating a plurality of color-separated images; an image generation module 302 generating a final image based on the color-separated images provided from the camera module 301, and a display module 303 displaying the final image provided from the image generation module 302.

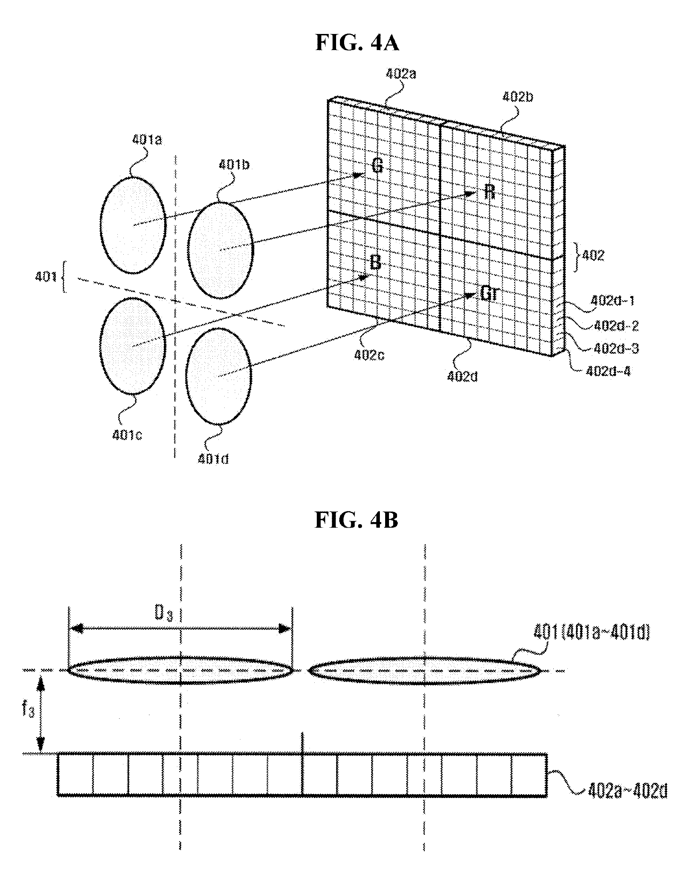

A structure of a digital camera module having a plurality of lenses, to which a method of recovering a high pixel image according to an embodiment of the present invention can be applied, will be described with reference to FIGS. 4A and 4B.

FIGS. 4A through 4C are diagrams illustrating a structure of a digital camera module having a plurality of lenses, to which a method of recovering a high pixel image according to an embodiment of the present invention can be applied.

The camera module 301 includes a plurality of lenses 401 and a plurality of sub image sensors 402 corresponding to the plurality of lenses 401. Here, a plurality of sub image sensors 402 have a color filter having an area coated with a single color and an original image for each color is obtained from each sub image sensor 402.

The digital camera module includes a plurality of lenses 401 concentrating incident light reflected from a predetermined object, the plurality of lenses 401 having the same diameter, and a plurality of sub image sensors 402a through 402d generating electric image signals in response to the light reflected from the object. That is, a color filter similar to that of the related art is included in the plurality of sub image sensors 402a through 402d, the color filter having a space separated into the plurality of color areas to implement the light concentrated through the lenses 401 as original full colors.

FIG. 4B is a side view of the digital camera module shown in FIG. 4A, in which assumptions are made that focal lengths f₃ ranging from of the plurality of lenses 401 (401a-401 d) having the same diameter D₃ and that of the object-image forming sensors 402a-402d are the same.

Accordingly, the plurality of lenses 401 (401a-401d) having the same diameter D₃ are arranged to be co-planac

With regard to the lens arrangement pattern, while the illustrated embodiment has shown that the plurality of lenses 401 (401a-401d) are arranged symmetrically in the up-down direction and left-right direction, the present invention is not limited thereto. The plurality of lenses 401 (401 a-401 d) may be linearly arranged in the horizontal or vertical direction. In a case where an odd number of lenses are available, the lenses may be arranged radially around a center lens and other various lens arrangement patterns may be adopted.

The plurality of lenses 401 (401a-401d) may concentrate light rays reflected from a predetermined object at their designated positions or at positions of the lenses other than a predetermined lens among the plurality of lenses shifted a predetermined number of pixels based on the position of the predetermined lens.

Hereinafter, for convenience of explanation, an embodiment in which four lenses arranged in the form of a 2 × 2 (width × height) matrix will be explained by way of example.

Based on the above-described principle that assuming that two digital cameras having different lens sizes, focal lengths and unit pixels have the same F number, since the quantities of light per unit area that arrive at the respective image sensor units of the two digital cameras are the same, the images obtained from the respective digital cameras will have the same light intensity. In this embodiment, a plurality of lenses 401 (401a-401d), each being smaller than the lens 201 shown in FIG. 2, and a plurality of sub image sensors 402a through 402d, each having a smaller number of unit pixels than the image sensor unit 202 shown in FIG. 2, are used. In addition, the focal length f₃ of FIG. 4B is shorter than the focal length f₂ of FIG. 2.

Assumptions are made that four million pixels are formed by the image sensor 202 shown in FIG. 2 and that one million pixels are formed by each of the plurality of sub image sensors 402a through 402d shown in FIG. 4A, respectively.

Accordingly, the sub image sensors 402a through 402d shown in FIG. 4A correspond to four image sensors each having one million of pixels. The four lenses 401 a-401d each having the same diameter D₃ produce images on the sub image sensors 402a through 402d that correspond to the lenses 401a-401d, respectively.

Each of the color filters in the sub image sensors 402a through 402d is quadrisected to make four areas to be suited to the sizes of the sub image sensors 402a through 402d and each area is then coated with a single color.

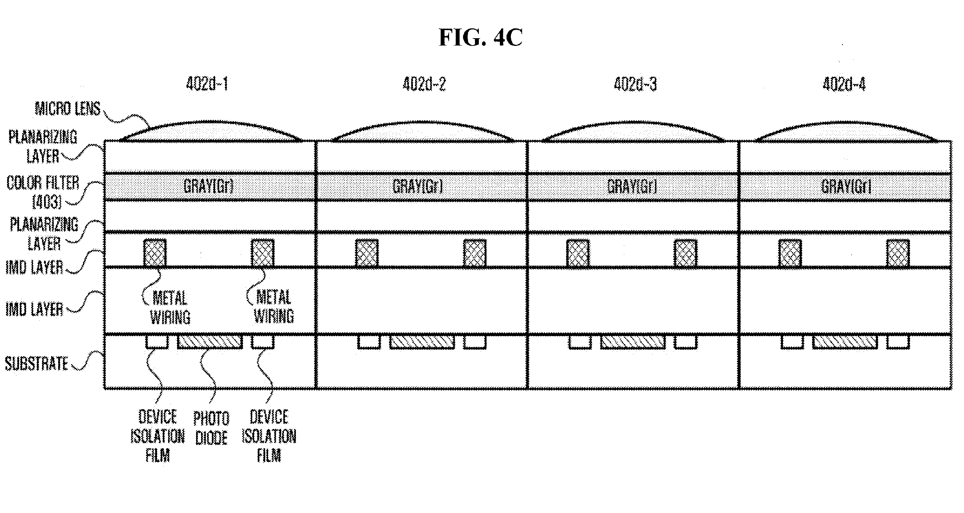

FIG. 4C is a sectional view of unit pixels 402d-1 through 402d-4 used to form the sub image sensors 402a through 402d of FIG. 4A. Since the unit pixels 402d-1 through 402d-4 exist in the same sub image sensor 402d, the same color filter 403 is included in the areas of the unit pixels 402d-1 through 402d-4.

Here, the color filter 403 is divided into a first filtering area and a second filtering area according to the transmittance of a color coated thereon. The quantities of light passing through the first and second filtering areas are made different by varying the transmittances of a color coated on the first and second filtering areas, thereby implementing high sensitivity sensing and low sensitivity sensing at the same time. Among various color areas, a color area having the highest transmittance is grouped into the first filtering area and the other color areas are grouped into the second filtering area.

Hereinafter, for convenience of explanation, an embodiment in which a plurality of color areas and sub image sensors are identified by the same reference numerals will be explained.

For example, respective color areas forming the color filter included in the sub image sensors 402a through 402d shown in FIG. 4A, that is, a green (G) color area, a red (R) color area, a blue (B) color area, and a gray (Gr) color area, are also identified by the same reference numerals as those of the sub image sensors, i.e., 402a, 402b, 402c, and 402d, respectively. The gray (Gr) color area 402d having the highest transmittance is grouped as the second color area, and the other color areas, that is, the green (G) filtering area 402a, the red (R) color area 402b and the blue (B) color area 402c are grouped as the first filtering area.

In another embodiment, a color filter of a color other than gray may be formed in the second filtering area. For example, a color filter of any one of white (W), yellow (Y), cyan and magenta may be formed. However, the color of a color filter formed in the second filtering area is not limited to these examples and a color filter of any color that has a higher transmittance than those of the color filters formed in the filtering areas of the first filter can be regarded to be included in the scope of the present invention.

As to the transmittance of the color filter shown in FIG. 4A, the transmittance of a gray (Gr) color filter is highest among blue (B), green (G), red (R), and gray (Gr) color filters.

As such, if the transmittance of the color corresponding to the second color area 402d is higher than the transmittance of the color corresponding to the first filtering areas 402a through 402c, the quantities of light passing through the first and second filtering areas become different.

This means that differences occur in the quantities of light arriving at the respective sub image sensors 402a through 402d matching the respective color areas, and that a high sensitivity sensing function and a low sensitivity sensing function can be implemented at the same time in the respective sub image sensors 402a through 402d.

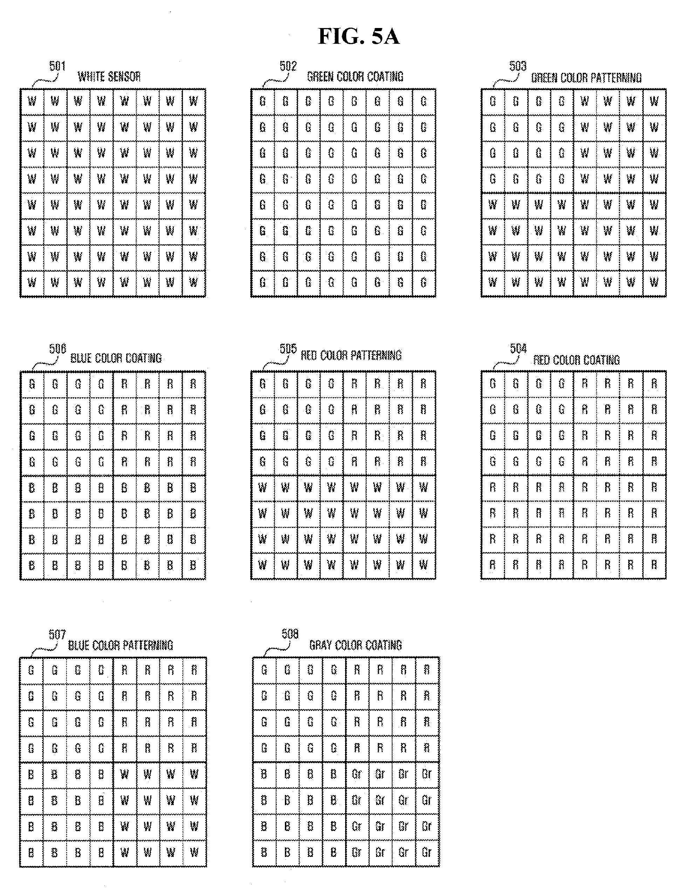

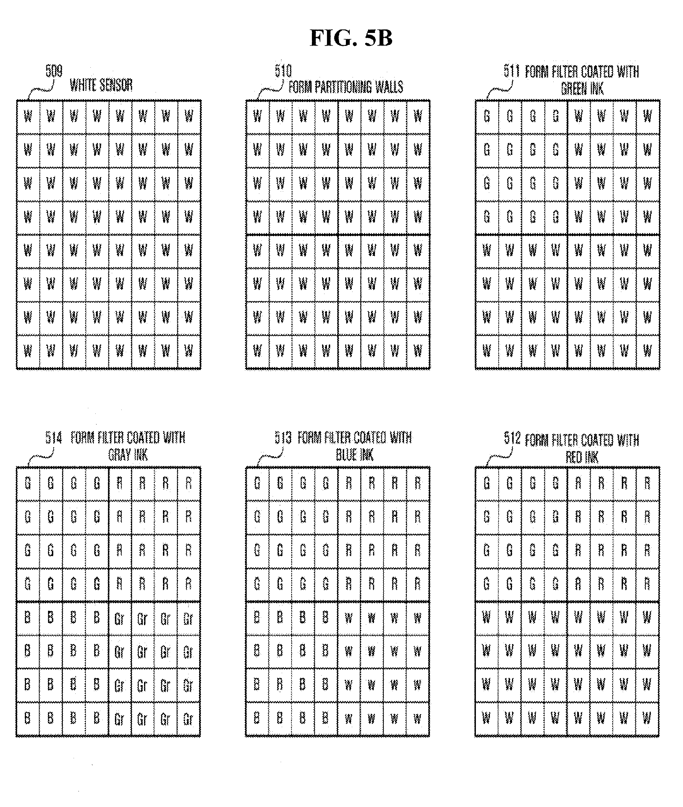

The above-described color filters may be coated by a photo-lithography method or an inkjet method, which are illustrated in FIGS. 5A and 5B, respectively.

In a case of coating each single color of blue (B), green (G), red (R), and gray (Gr) according to the photo-lithography method, an original white sensor without color (501) is subjected to green color coating (502). Then, an area of the green color coated image sensor, excluding one quarter (1/4) the area of the green color coated image sensor, is subjected to green color patterning (503) with three quarters (3/4) the area of the green color coated image sensor stripped.

The stripped image sensor is subjected to red color coating (504). Then, two quarters (2/4) of an area of the red color coated image sensor are stripped.

The resultant sub image sensors correspond to image sensors having each one quarter an area of a green and a red color coated image sensor, respectively, with two quarters (2/4) the area of the green color patterned image sensor subjected to blue color coating and gray color coating (506 ~ 508).

Compared to the Bayer pattern color filtering process, the present photo-lithography method is easy to perform.

FIG. 5B illustrates the inkjet method.

The operation begins with a white sensor 509. According to the inkjet method, a partitioning wall forming operation (510), in which as many partitioning walls as lenses, e.g., 4 (four) in the illustrated embodiment, are formed in an image sensor, is first performed, and 4 areas produced by the partitioning walls are coated with desired color inks, i.e., green, red, blue and gray inks, respectively (511~514).

The inkjet method is quite a simplified process and can advantageously save a quantity of ink used, thereby ultimately reducing the sensor manufacturing cost.

The color filter coated in the above manner matches the plurality of lenses and the plurality of sub image sensors, respectively.

For example, referring to FIG. 4A, in a case where green (G), red (R), blue (B), and gray (Gr) color filters are included in the sub image sensors 402a through 402d, the incident light ray reflected from the object through the first lens 401 a among the four lenses 401 (401 a-401 d) forms a green (G) color image by the green (G) color filter included in the sub image sensor 402a matching the first lens 401 a. The incident light ray reflected from the object through the second lens 401 b among the four lenses 401 (401 a-401d) forms a red (R) color image by the red (R) color filter included in the sub image sensor 402b matching the second lens 401b.

Similarly, the incident light rays reflected from the object through the third lens 401c and the fourth lens 401d among the four lenses 401 (401a-401d) form a blue (B) color image and a gray (Gr) color image by the blue (B) color filter and the gray (Gr) color filters included in the sub image sensors 402c and 402d, matching the third and fourth lenses 401c and 401d, respectively.

In other words, the incident light rays reflected from the object through the four lenses 401 a-401 d form images having colors of the corresponding color filters included in the respective sub image sensors 402a through 402d, that is, four images of the same size and different colors.

Meanwhile, the image generation module 302 receives a plurality of color-separated images from the camera module 301 and generates a final image based on the color-separated images provided from the camera module 301.

For this purpose, the image generation module 302 is composed of an original image generation module 302a, an intermediate image generation module 302b, and a final image generation module 303c.

In the image generation module 302 according to the current embodiment of the present invention, the original image generation module 302a receives the input of the plurality of the original color-separated images provided from the camera module 301.

That is to say, the original image generation module 302a receives a green image obtained by the sub image sensor 402a including the green color filter, a red image obtained by the sub image sensor 402b including the red color filter, a blue image obtained by the sub image sensor 402c including the blue color filter, and a gray image obtained by the sub image sensor 402d including the gray color filter, as shown in FIG. 4A.

Here, the green, red and blue images provide color information required for generating the final image through the final image generation module 302c, which will be explained later. In contrast, the gray image provides luminance information required for generating the final image.

In an alternative embodiment of the present invention, when the obtained original images are not aligned with designated positions of the corresponding sub image sensors 402a through 402d, the original image generation module 302a corrects positions of the original images. In addition, when the obtained original images are not uniform in sensitivity, the original image generation module 302a corrects sensitivity levels of the original images other than the original image having the lowest sensitivity level, based on the sensitivity of the original image having the lowest sensitivity level.

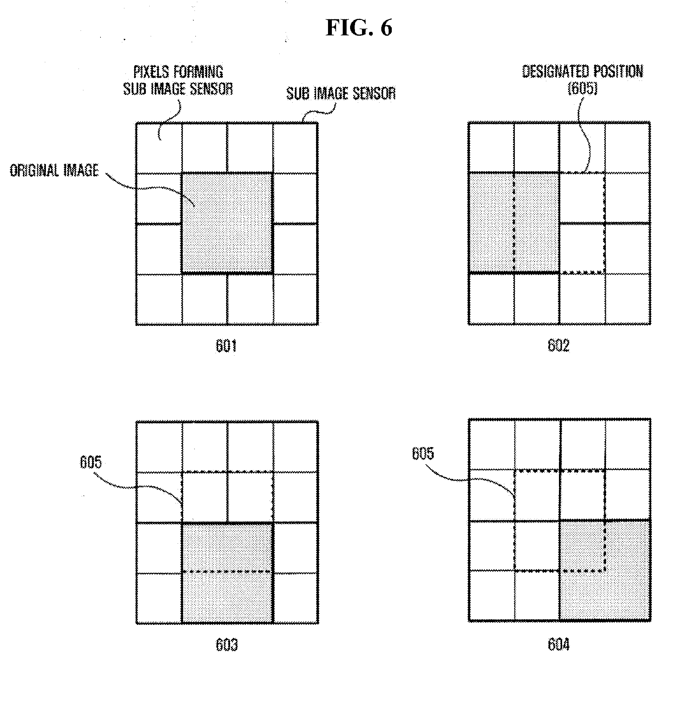

FIG. 6 is a diagram illustrating a process in which the original image generation module (302a) corrects misalignment in positions and non-uniformity in sensitivity of original images.

Light rays incident onto a predetermined object through the four lenses 401 a through 401 d which are disposed at fixed positions are transmitted through color filters included in the respective sub image sensors 402a through 402d matching the lenses 401 a through 401 d to form images having colors corresponding to the color filters. Then, the original image generation module 302a checks positions of the respective images formed in the sub image sensors 402a through 402d.

Referring to FIG. 6, the respective images formed at positions in the sub image sensors 402a through 402d are identified by reference numerals 601 through 604.

Reference numeral 601 indicates an image formed on the sub image sensor 402a. In an embodiment of the present invention, unless the position-fixed, four lenses 401a through 401 d are shifted a predetermined number of pixels, an image positioned at the center of the sub image sensor 402a can be said that the image is positioned at a normal position, that is, a designated position of the image, as indicated by a dotted rectangle 605.

Reference numeral 602 indicates an image formed on the sub image sensor 402b, the image shifted left one pixel from the designated position. Reference numeral 603 indicates an image formed on the sub image sensor 403b, the image shifted downward one pixel from the designated position. Reference numeral 604 indicates an image formed on the sub image sensor 404b, the image shifted diagonally one pixel from the designated position, that is, one pixel each in the right and downward directions from the designated position.

The images may deviate from their designated positions of the respective sub image sensors 402a through 402d, as shown in FIG. 6, presumably due to optical misalignment. Such optical misalignment generally makes the images of the respective sub image sensors 402a through 402d deviate from their designated positions, thereby making it difficult to attain clean and clear images.

According to the embodiments of the present invention, the original image generation module 302a can correct the deviated positions of the images due to optical misalignment due to software.

In detail, the original image generation module 302a corrects positions of images due to optical misalignment in the following manner. For example, for image 602, where the image has deviated left one pixel from its designated position, the image is shifted right one pixel. In image 603, the image is shifted upward one pixel. In image 604, the image is shifted left one pixel and then upward one pixel. Alternatively, in image 604, the image may be shifted upward one pixel and then left one pixel.

In addition, the original image generation module 302a corrects non-uniformity in sensitivity, which will be described with reference to FIG. 6.

Assuming that the respective sensitivity levels of the images in 601, 602, 603 and 604 are 10, 9, 8 and 7, respectively, the original image generation module 302a corrects non-uniform sensitivity levels by adjusting the sensitivity levels of the images other than the image 604 having the lowest sensitivity level, i.e., 7, based on the sensitivity of the image 604 having the sensitivity level of 7.

Through the above-described process, the image of each color is provided to the intermediate image generation module 302b.

The intermediate image generation module 302b rearranges pixel information of pixels at identical positions at the respective original images provided from the original image generation module 302a, so that an intermediate image having a higher resolution than that of the original image for each color can be generated.

Here, the term "intermediate image," used to distinguish from the respective images formed on the sub image sensors denotes an image having a higher resolution than the original image obtained by rearranging pieces of pixel information of pixels at identical positions in the respective original images. However, the term "intermediate image" does not necessarily mean a final image having a relatively high resolution. The final image can be generated by performing demosaicing or deblurring of the intermediate image. Meanwhile, the generated intermediate image may have the same resolution as that of the image sensor 402 in which the plurality of sub image sensors 402a through 402d are arranged.

For example, if each of the plurality of sub image sensors 402a through 402d has a resolution of 4 × 4, the intermediate image may have a resolution of 8 × 8, which is the same as that of the image sensor 402. The intermediate image is then provided to the final image generation module 302c. The final image generation module 302c generates the final image by performing demosaicing of the intermediate image provided from the intermediate image generation module 302b and deblurring the demosaiced intermediate image.

The display module 303 displays the final image provided from the final image generation module 302c.

The display module 303 can be implemented in the form of, for example, a flat-panel display or a touch screen, but is not limited to these forms.

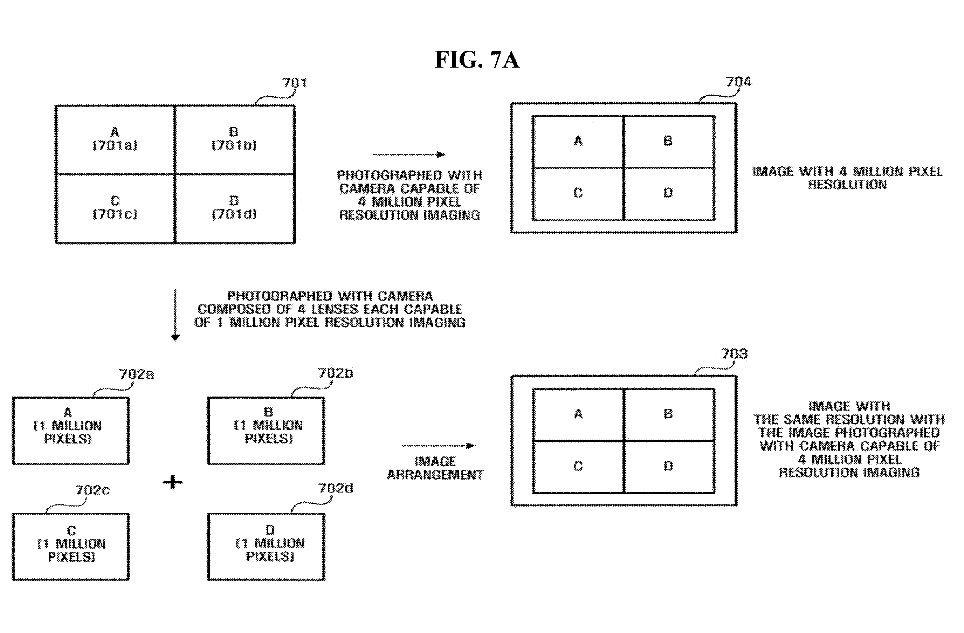

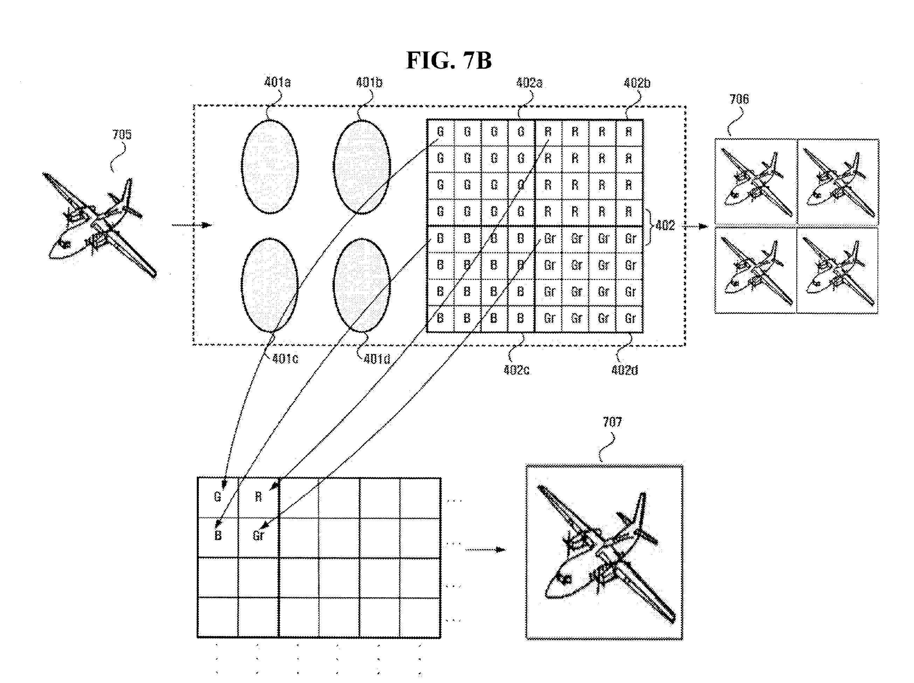

FIGS. 7A and 7B are diagrams illustrating a process of generating intermediate images according to an embodiment of the present invention.

Before explaining a method of recovering a high pixel image, it is assumed that in the apparatus 300 shown in FIG. 3, four lenses of the camera module 301 are arranged such that the lenses other than a predetermined lens disposed at a fixed position are shifted a predetermined number of pixels from the position of the predetermined lens.

Here, the shifting of the lenses by a predetermined number of pixels may include shifting of the lenses based on both a moving distance and a moving direction.

When a predetermined object 701 composed of four rectangles of the same size, as shown in FIG. 7A, is photographed using the camera module 301, assumptions are made that a lens 401a is disposed at a fixed position so as to photograph a rectangle A (701a) and the remaining lenses 401 b through 401 d are shifted a predetermined number of pixels to a predetermined position based on the position of the lens 401 a, so as to photograph rectangles B, C and D (701b, 701 c and 701 d).

In the shifting to the predetermined position, the lens that photographs the rectangle B (701b) is shifted right to a predetermined position based on the position of the lens 401a photographing the rectangle A (701a). The lens that photographs the rectangle C (701c) is shifted downward to a predetermined position based on the position of the lens 401 a photographing the rectangle A (701 a).

In addition, the lens that photographs the rectangle D (701d) is shifted diagonally, i.e., in right and downward directions, to a predetermined position based on the position of the lens 401 a photographing the rectangle A (701 a).

The rectangles A (702a), B (702b), C (702c), and D (702d) correspond to the images formed on the respective sub image sensors 402a through 402d through the lenses 401a through 401d, respectively.

Assuming that one million pixels are formed by the plurality of sub image sensors 402a through 402d matching the corresponding lenses, respectively, the photographed images of the rectangles A (702a), B (702b), C (702c), and D (702d) are arranged according to the shape of the object to form a single image indicated by a symbol "+" in FIG. 7A. In this way, it is possible to form an image 703 having the same resolution as an overall image 704 of the object photographed with a camera capable of 4 million pixel resolution imaging.

FIG. 7B illustrates a method of generating intermediate images according to an embodiment of the present invention.

On the basis of the same principle as described above with reference to FIG. 7A, among four lenses 401 a through 401 d of the camera module 301 for photographing a predetermined object 705, one lens 401 a is disposed at a fixed position and the other lenses 401 b through 401 d are shifted pixelwise one by one from the position of the lens 401 a.

In other words, based on the position-fixed lens 401a, positions of the lenses 401 b through 401d are shifted right one pixel, downward one pixel, and diagonally one pixel, i.e., one pixel in each of the right and downward directions.

Using the aforementioned camera module 301, the intermediate image generation module 302b of the image generation module 302 (see FIG. 3) rearranges pixel information of pixels at identical positions at the respective original images 706 provided from the original image generation module 302a, so that an intermediate image 707 having a higher resolution than that of the original image for each color can be generated.

The final image generation module 302c performs demosaicing on the intermediate image 707 generated by the intermediate image generation module 302b, and deblurring of the demosaiced intermediate image, thereby restoring the original image as a final image having a higher resolution.

For brevity, the image generation module 302 described with reference to FIG. 7A will now be referred to as a first image generation module.

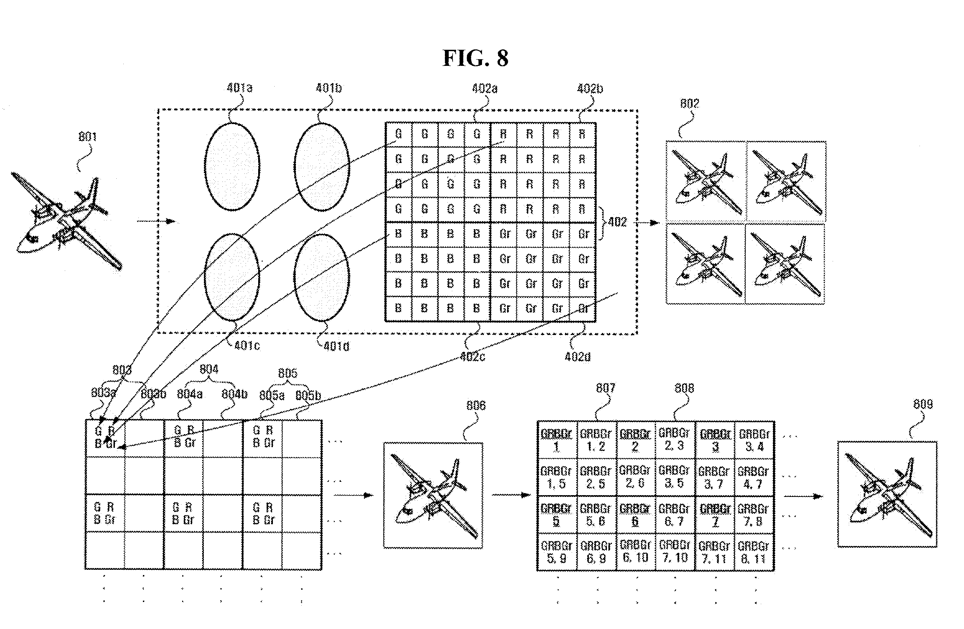

FIG. 8 is a diagram illustrating a process in which the image generation module (302) recovers a high pixel image according to another embodiment of the present invention. A camera module used in the current embodiment is the same as described above and a repetitive explanation thereof will not be given.

Meanwhile, the original image generation module 302a of the image generation module 302 divides the original color-separated images provided from the camera module 301 into a plurality of pixel groups. The intermediate image generation module 302b generates a first intermediate image 802, from an original image, having the same resolution as sub image sensors 402a through 402d shown in FIG. 8.

Here, the first intermediate image 802 may be divided into a plurality of pixel groups 803, 804, and 805, each pixel group formed of 2 × 2 virtual pixels (width × height).

In each of the plurality of pixel groups 803, 804, and 805, pixels can be divided into main pixels 803a, 804a, and 805a onto which color and luminance information is mapped, and sub pixels 803b, 804b, and 805b positioned in the vicinity of the main pixels 803a, 804a, and 805a and having no information.

The position of the main pixel 803a, 804a, 805a may be set to a variety of positions in each pixel group 803, 804, 805.

For example, in each pixel group 803, 804, 805 formed of 2 × 2 pixels as shown in FIG. 8, the position corresponding to the first row and the first column, that is, 803a, 804a, 805a, may be determined as the position of the main pixel. As another example, the position corresponding to the first row and the second column in each pixel group, that is, 803b, 804b, 805b, may be determined as the position of the main pixel.

If the first intermediate image 802 is generated in the above-described manner, the intermediate image generation module 302b maps pixel information of pixels at identical positions in the respective original color-separated images, onto the main pixel of the pixel group corresponding to the identical positions.

For example, the intermediate image generation module 302b maps the pixel information of pixels at the first row and the first column of the respective original color-separated images, onto the main pixel 803a of the pixel group 803 positioned at the first row and the first column in the first intermediate image 802.

Likewise, the intermediate image generation module 302b maps the pixel information of pixels at the first row and the first column of the respective color-separated images, onto the main pixel 804a of the pixel group 804 positioned at the first row and the second column in the first intermediate image 802.

In addition, the intermediate image generation module 302b obtains luminance information based on color information in the pixel information of the pixels at identical positions in the respective color-separated images, and maps the obtained luminance information onto the main pixels 803a through 805a of the respective pixel groups 803 through 805.

Further, the intermediate image generation module 302b maps the obtained luminance information onto the main pixel of the pixel group positioned at the first row and the first column in the first intermediate image 802.

Referring to FIG. 8, it can be seen that green (G), red (R), and blue (B) color information provided by the sub image sensors 402a through 402c and gray (Gr) color information provided by a sub image sensor 402d are mapped onto the main pixels of the respective pixel groups. Although not shown in FIG. 8, the luminance information (Y) detected from the 3 pieces of color information may further be mapped onto the main pixels 803a through 805a of the respective pixel groups 803a through 805a.

For example, it can be seen that onto the main pixel 803a of the first pixel group 803, the green (G) color information of the pixel positioned at the first row and the first column of the green image, the red (R) color information of the pixel positioned at the first row and the first column of the red image, and the blue (B) color information of the pixel positioned at the first row and the first column of the blue image, the luminance information of the pixel positioned at the first row and the first column of the gray image, and the luminance information detected based on the 3 pieces of color information are mapped.

Likewise, it can be seen that onto the main pixel 804a of the second pixel group 804, the green (G) color information of the pixel positioned at the first row and the second column of the green image, the red (R) color information of the pixel positioned at the first row and the second column of the red image, and the blue (B) color information of the pixel positioned at the first row and the second column of the blue image, the luminance information of the pixel positioned at the first row and the second column of the gray image, and the luminance information detected based on the already provided 3 pieces of color information are mapped.

Accordingly, the intermediate image generation module 302b generates a second intermediate image 806 in which 3 pieces of color information and 2 pieces of luminance information are mapped onto the main pixel 803a, 804a, 805a of each pixel group 803, 804, 805.

Thereafter, the intermediate image generation module 302b interpolates the second intermediate image 806 using an interpolation method.

That is to say, the intermediate image generation module 302b obtains pixel information to be recorded in each sub pixel 803b, 804b, 805b, based on the information of the main pixels 803a, 804a, and 805a shown in FIG. 8.

The intermediate image generation module 302b may interpolate the second intermediate image 806 according to a variety of algorithms.

For example, the pixel information to be recorded in each sub pixel in the second intermediate image 806 may be calculated from the information held by the main pixel adjacent to the sub pixel.

More specifically, in FIG. 8, pixel information to be recorded in the sub pixel 803b positioned between the main pixel 803a of the first pixel group 803 and the main pixel 804a of the second pixel group 804 may be determined to be the mean value 807 of the pixel information of the two main pixels 803a and 804a.

Likewise, pixel information to be recorded in the sub pixel 804b positioned between the main pixel 804a of the second pixel group 804 and the main pixel 805a of the third pixel group 805 may be determined to be the mean value 808 of the pixel information of the two main pixels 804a and 805a.

If the interpolation of the second intermediate image 806 is performed in this manner, the final image generation module 302c performs deblurring of the interpolated second intermediate image 806. As a result, a final image 809 having a high resolution (that is, the resolution of the sub image sensor × 4) is generated from the color-separated images having a low resolution (that is, the resolution of the sub image sensor) obtained through each sub image sensor.

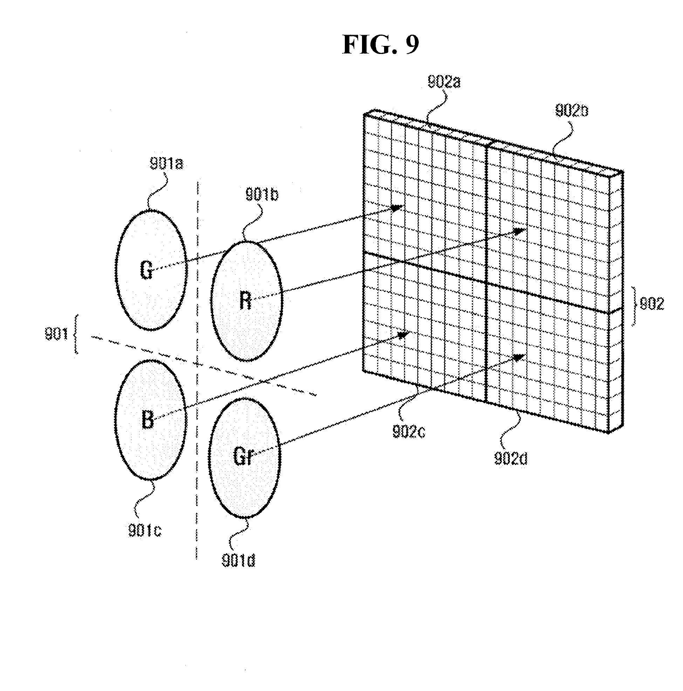

For brevity, the image generation module 302 described with reference to FIG. 8 will now be referred to as a second image generation module. FIG. 9 is diagram illustrating a digital camera module according to a second embodiment of the present invention. The digital camera module according to the second embodiment of the present invention has the same structure as that of the digital camera module according to the first embodiment of the present invention shown in FIG. 4A except for the following characteristics. That is, the camera module according to the second embodiment includes a lens group 901 having a plurality of lenses 901 a through 901 d with different colors. Here, the plurality of lenses 901a through 901d may be divided into a first group and a second group according to transmittance. A lens included in the second group may have a color having a higher transmittance than that of a lens included in the first group.

Specifically, for example, the first group may include a first lens 901a having a green color, a second lens 901 b having a red color, and a third lens 901 c having a blue color among the 4 lenses, a fourth lens 901d included in the second group may have a color having a higher transmittance than the transmittances of green, red, and blue, i.e., a gray color

Thus, when the plurality of the lenses 901a through 901d have different colors, a separate color filter layer is not formed in a plurality of sub image sensors 902a through 902d.

Also, an image sensor 902 is divided into the plurality of sub image sensors 902a through 902d corresponding to the plurality of the lenses 901 a through 901 d, respectively, and obtains color-separated images by using the plurality of the lenses 901a through 901d. The color-separated images are provided from the camera module 301 through an image generation module 302, as described in FIG. 3, and a final image is generated based on the color-separated images to then be displayed on a display module 303. The image generation module 302 generating a final image is the same as described above with reference to FIGS. 3 through 8, and a detailed explanation thereof will not be given.

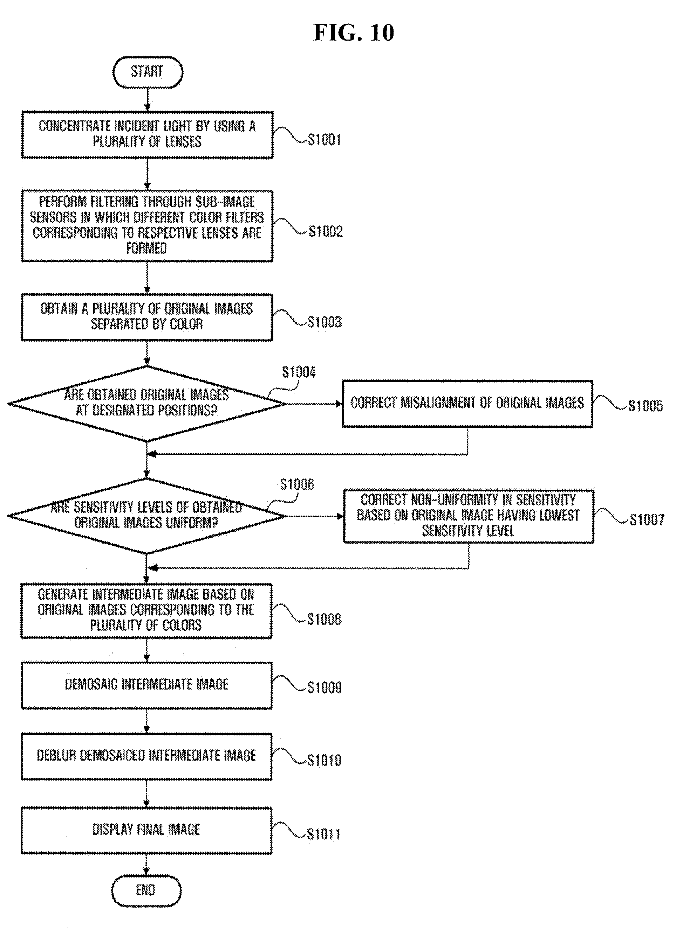

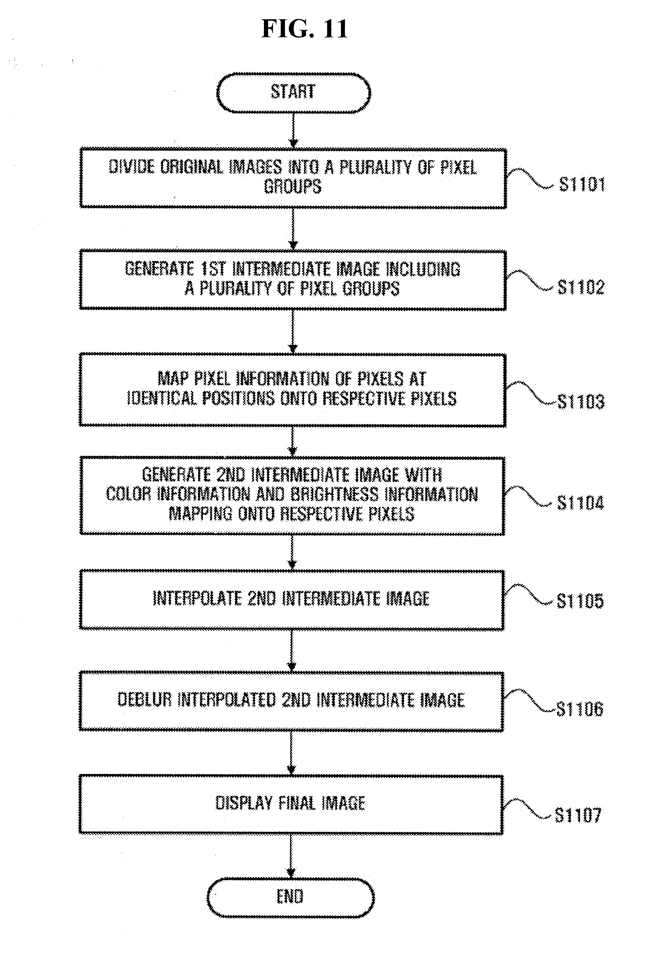

Next, a method of recovering a high pixel image according to an embodiment of the present invention will be described with reference to FIGS. 10 and 11.

FIG. 10 is a flow diagram illustrating a method of recovering a high pixel image using the first image generation module shown in FIG. 7B with the camera module having the structure illustrated in FIG. 4A.

For convenience of explanation, it is assumed that red, green, blue, and gray filters are formed in the plurality of sub image sensors 402a through 402d, respectively forming the image sensor 402, as shown in FIG. 7B. Also, it is assumed that the image sensor 402 is formed with 8 × 8 pixels (width × height) and each of the plurality of sub image sensors 402a through 402d forming the image sensor 402 is formed with 4 × 4 pixels (width × height).

First, light rays reflected from a predetermined object 705 are concentrated through the four lenses 401a through 401d in operation S1001.

The light rays concentrated through the lenses 401 a through 401 d are transmitted through the color filters included in the respective sub image sensors 402a through 402d matching the lenses 401 a through 401 d in operation S1002.

As a result, the plurality of color-separated images are obtained through the respective sub image sensors 402a through 402d in operation S1003. Here, the image obtained by each of the sub image sensors 402a through 402d has a resolution that is one fourth (1/4) the resolution of the image sensor 402. That is, since the resolution of the image sensor 402 is 8 × 8, each of the plurality of color-separated images obtained through the respective sub image sensors 402a through 402d has a resolution of 4×4.

After operation S1003, the image generation module 302 checks whether or not the original color-separated images 706 obtained in operation S1003 are positioned at their designated positions in operation S1004.

As a checking result, if it is determined that the obtained original color-separated images 706 are misaligned with their designated positions, the image generation module 302 corrects the positions of the original color-separated images 706 in operation S1005, so that the original color-separated images 706 are normally positioned to their designated positions.

If it is determined that the obtained original color-separated images 706 are positioned at their designated positions, the image generation module 302 checks whether or not the original color-separated images 706 obtained in operation S1003 are uniform in sensitivity in operation S1006.

As a checking result, if it is determined that the obtained original color-separated images 706 are not uniform in sensitivity, the image generation module 302 corrects non-uniformity in sensitivity based on the sensitivity of the original color-separated image having the lowest sensitivity level, in operation S1007.

If it is determined that the obtained original color-separated images 706 are uniform in sensitivity, the image generation module 302 generates a plurality of original images based on the obtained color-separated images 706, rearranges pixel information of pixels at identical positions at the respective original images, so that an intermediate image 707 having a higher resolution than that of the original image for each color can be generated, in operation S1008.

Thereafter, the intermediate image is demosaiced in operation S1009, and the demosaiced intermediate image is deblurred to generate a final image in operation S1010.

Next, the final image generated by the image generation module 302 is displayed through the display module 303 in operation S1011.

FIG. 11 is a flow diagram illustrating a method of recovering a high pixel image using a second image generation module shown in FIG. 8 with the camera module having the structure illustrated in FIG. 4A.

First, operations in which a plurality of color-separated images are provided from a camera module 301 having the structure illustrated in FIG. 4A is the same as the operations S1001 through S1007 shown in FIG. 10. The original image generation module 302a divides the original color-separated images into a plurality of pixel groups 303, 304, and 305, each pixel group formed of 2 × 2 virtual pixels (width × height), as shown in FIG. 8, in operation S1101.

Then, the intermediate image generation module 302b generates a first intermediate image 802 having the same resolution as the image sensor 402 shown in FIG. 8 in operation S1102.

Next, the intermediate image generation module 302b maps pixel information of pixels at identical positions in the respective original color-separated images, onto the main pixel of the pixel group corresponding to the identical positions in operation S1103.

In operation S1104, the intermediate image generation module 302b generates a second intermediate image 806 in which 3 pieces of color information and 2 pieces of luminance information are mapped onto the main pixel 803a, 804a, 805a of each pixel group 803, 804, 805.

In operation S1105, the intermediate image generation module 302b interpolates the second intermediate image 806 using an interpolation method.

After the second intermediate image 806 is interpolated, the final image generation module 302c performs deblurring on the interpolated second intermediate image 806 in operation S1106.

As a result, the final image 809 having a high resolution (that is, the resolution of the sub image sensor × 4) is generated from the color-separated images having a low resolution (that is, the resolution of the sub image sensor), to then be displayed through the display module 303 in operation S1107.

The high pixel image recovering method shown in FIG. 10 using the camera module having the structure illustrated in FIG. 9 is substantially the same as the high pixel image recovering method using the first image generation module illustrated in FIG. 7B, except that light rays are concentrated through color lenses, instead of color filters, and a plurality of original color-separated images are obtained through sub image sensors, in operations S1001 through S1007. Similarly, the high pixel image recovering method shown in FIG. 11 using the camera module having the structure illustrated in FIG. 9 is substantially the same as the high pixel image recovering method using the second image generation module illustrated in FIG. 8, because the operations in which a plurality of color-separated images are provided from the camera module 301 having the structure illustrated in FIG. 4 is the same as the operations S1001 through S1007 shown in FIG. 11, as stated above.

To sum up, with the digital camera according to the embodiments of the present invention, which is composed of four lenses and four image sensors, the four lenses each having a relatively smaller lens size and a shorter focal length than the lens shown in FIG.2A, and the four image sensors each having a smaller number of unit pixels, i.e., 1 million pixels, than that of the 4 million pixel image sensor shown in FIG. 2A, the same image brightness as in the image sensor shown in FIG. 2A can be achieved due to the same F number. Also, an image with the same resolution with the image photographed with a camera capable of 4 million pixel resolution imaging, as shown in FIG. 2A, can be restored through a predetermined procedure using 4 images photographed by the sub image sensors shown in FIG. 4A, each capable of 1 million pixel resolution imaging.

Since the digital camera according to the embodiment of the present invention has relatively smaller lenses and shorter focal lengths, a miniaturized, slim design of the digital camera can be achieved while maintaining the same resolution.

According to the method and apparatus for restoring a high pixel image as described above, one or more of the following effects can be obtained.

The method and apparatus provide an advantage that a high pixel image can be obtained with a miniaturized camera module.

Since the size of a digital camera mounted on a small-sized digital device is reduced, the digital device can further be miniaturized.

In addition, the present invention enables a high pixel image to be recovered while reducing the size of a digital camera mounted on a small-sized digital device.

Further, the apparatus and method of recovering a high pixel image according to the present invention can easily correct optical misalignment and non-uniformity in sensitivity in representing the high-pixel image.

By using a color filter having different transmittances, the apparatus and method of recovering a high pixel image according to the present invention can also implement high-sensitivity and low-sensitivity image sensing at the same time even without changing the structure of an image sensor unit.

Also, the apparatus and method of recovering a high pixel image according to the present invention allows for a greater number of options available when designing a small-sized digital device in which the digital camera is mounted.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An apparatus to restore a high pixel image comprising:
a camera module including a plurality of lenses, and a plurality of sub image sensors corresponding to the plurality of lenses, the plurality of sub image sensors each including a color filter having a single color;
an original image generation module receiving a plurality of original color-separated images;
an intermediate image generation module rearranging pixel information of pixels at identical positions at the plurality of original color-separated images provided from the original image generation module and generating an intermediate image having a higher resolution than each of the original color-separated images; and
a final image generation module performing demosaicing on the intermediate image, performing deblurring on the demosaiced intermediate image, and generating a final image.

2. The apparatus of claim 1, wherein the plurality of lenses concentrate light rays reflected from a predetermined object at designated positions of the lenses or at positions of the lenses other than a predetermined lens among the plurality of lenses shifted a predetermined number of pixels based on a position of the predetermined lens.

3. The apparatus of claim 1, wherein when the obtained original color-separated images are not aligned with designated positions of the corresponding sub image sensors, the original image generation module corrects positions of the original images.

4. The apparatus of claim 1, wherein when the obtained original color-separated images are not uniform in sensitivity, the original image generation module corrects sensitivity levels of the original images other than the original image having a lowest sensitivity level, based on the sensitivity of the original image having the lowest sensitivity level.

5. The apparatus of claim 1, wherein the color filter is divided into a first filtering area and a second filtering area according to a transmittance of a color coated thereon.

6. An apparatus to restore a high pixel image comprising:
a camera module including a plurality of lenses, and a plurality of sub image sensors corresponding to the plurality of lenses, each of the plurality of sub image sensors comprising a color filter, the color filter separated into a plurality of color areas having different colors;
an original image generation module dividing a plurality of original color-separated images into a plurality of pixel groups;
an intermediate image generation module mapping pixel information of pixels at identical positions in the plurality of original color-separated images divided into the plurality of pixel groups onto respective pixels of the pixel group corresponding to the identical positions and generating an intermediate image having a higher resolution than each of the original color-separated images; and
a final image generation module recovering the intermediate image using a predetermined interpolation algorithm, performing deblurring on the received intermediate image, and generating a final image.

7. The apparatus of claim 6, wherein when the obtained original color-separated images are not aligned with designated positions of the corresponding sub image sensors, the original image generation module corrects positions of the original images.

8. The apparatus of claim 6, wherein when the obtained original color-separated images are not uniform in sensitivity, the original image generation module corrects sensitivity levels of the original images other than the original image having the lowest sensitivity level, based on the sensitivity of the original image having the lowest sensitivity level.

9. The apparatus of claim 6, wherein the color filter is divided into a first filtering area and a second filtering area according to a transmittance of a color coated thereon, and the transmittance of the color coated on the second filtering area is higher than the transmittance of the color coated on the first filtering area.

10. The apparatus of claim 6, wherein each of the plurality of pixel groups includes a plurality of pixels corresponding to an arrangement pattern of the color filter.

11. The apparatus of claim 6, wherein the pixel information comprises luminance information provided by the sub image sensor corresponding to the first filtering area and color information provided by the sub image sensor corresponding to the second filtering area.

12. An apparatus to restore a high pixel image comprising:
a camera module including a plurality of color lenses, and a plurality of sub image sensors corresponding to the plurality of color lenses, wherein each of the plurality of color lenses has a single color and a plurality of original color-separated images are obtained through the plurality of sub image sensors;
an original image generation module receiving the plurality of original color-separated images;
an intermediate image generation module rearranging pixel information of pixels at identical positions at the plurality of original color-separated images provided from the original image generation module and generating an intermediate image having a higher resolution than each of the original color-separated images; and
a final image generation module performing demosaicing on the intermediate image, performing deblurring on the demosaiced intermediate image, and generating a final image.

13. The apparatus of claim 12, wherein the plurality of lenses concentrate light rays reflected from a predetermined object at designated positions of the lenses or at positions of the lenses other than a predetermined lens among the plurality of lenses shifted a predetermined number of pixels based on a position of the predetermined lens.

14. The apparatus of claim 12, wherein when the obtained original color-separated images are not aligned with designated positions of the corresponding sub image sensors, the original image generation module corrects positions of the original images.

15. The apparatus of claim 12, wherein when the obtained original color-separated images are not uniform in sensitivity, the original image generation module corrects sensitivity levels of the original images other than the original image having a lowest sensitivity level, based on the sensitivity of the original image having the lowest sensitivity level.

16. The apparatus of claim 12, wherein each of the plurality of color lenses is divided into a first lens area and a second lens area according to a transmittance of a color coated thereon, and the transmittance of the color coated on the second lens area is higher than the transmittance of the color coated on the first lens area.

17. An apparatus to restore a high pixel image comprising:
a camera module including a plurality of color lenses, and a plurality of sub image sensors corresponding to the plurality of color lenses, wherein each of the plurality of color lenses has a single color and a plurality of original color-separated images are obtained through the plurality of sub image sensors;
an original image generation module dividing the plurality of original color-separated images into a plurality of pixel groups;
an intermediate image generation module mapping pixel information of pixels at identical positions in the plurality of original color-separated images divided into the plurality of pixel groups onto respective pixels of the pixel group corresponding to the identical positions and generating an intermediate image; and
a final image generation module recovering the intermediate image using a predetermined interpolation algorithm, performing deblurring on the received intermediate image, and generating a final image.

18. The apparatus of claim 17, wherein when the obtained original color-separated images are not aligned with designated positions of the corresponding sub image sensors, the original image generation module corrects positions of the original images.

19. The apparatus of claim 17, wherein when the obtained original color-separated images are not uniform in sensitivity, the original image generation module corrects sensitivity levels of the original images other than the original image having the lowest sensitivity level, based on the sensitivity of the original image having the lowest sensitivity level.

20. The apparatus of claim 17, wherein each of the color lenses is divided into a first lens area and a second lens area according to a transmittance of a color coated thereon, and the transmittance of the color coated on the second lens area is higher than the transmittance of the color coated on the first lens area.

21. The apparatus of claim 17, wherein each of the plurality of pixel groups includes a plurality of pixels corresponding to an arrangement pattern of the color filter.

22. The apparatus of claim 20, wherein the pixel information comprises luminance information provided by the sub image sensor matching the first lens area and color information provided by the sub image sensor matching the second lens area.

23. A method of restoring a high pixel image in a camera module including a plurality of lenses each including a color filter having a single color, and a plurality of sub image sensors corresponding to the plurality of lenses, the method comprising:
obtaining a plurality of original images through each of the plurality of sub image sensors;
receiving the plurality of original images and generating a plurality of original color-separated images;
rearranging pixel information of pixels at identical positions at the plurality of original color-separated images provided from an original image generation module of the camera module and generating an intermediate image having a higher resolution than each of the original color-separated images; and
performing demosaicing on the intermediate image, performing deblurring on the demosaiced intermediate image, and generating a final image from the deblurred image.

24. The method of claim 23, further comprising concentrating light rays reflected from a predetermined object with the plurality of lenses at designated positions of the lenses or at positions of the lenses other than a predetermined lens among the plurality of lenses shifted a predetermined number of pixels based on a position of the predetermined lens.

25. The method of claim 24, wherein when the obtained original color-separated images are not aligned with the designated positions of the corresponding sub image sensors, and the generating of the plurality of original color-separated images comprises correcting positions of the original images.

26. The method of claim 23, wherein when the obtained original color-separated images are not uniform in sensitivity, the generating of the plurality of original color-separated images comprises correcting sensitivity levels of the original images other than the original image having a lowest sensitivity level, based on the sensitivity of the original image having the lowest sensitivity level.

27. The method of claim 23, further comprising dividing the color filter into a first filtering area and a second filtering area according to a transmittance of a color coated thereon.

28. A method of restoring a high pixel image in a camera module including a plurality of lenses each including a color filter having a single color, and a plurality of sub image sensors corresponding to the plurality of lenses, the method comprising:
obtaining a plurality of original color-separated images through each of the plurality of sub image sensors;
dividing the obtained plurality of original color-separated images into a plurality of pixel groups;
mapping pixel information of pixels at identical positions in the plurality of original color-separated images divided into the plurality of pixel groups onto respective pixels of the pixel group corresponding to the identical positions and generating an intermediate image; and
recovering the intermediate image using a predetermined interpolation algorithm, performing deblurring on the interpolated intermediate image, and generating a final image from the deblurred image.

29. The method of claim 28, wherein when the obtained original color-separated images are not aligned with the designated positions of the corresponding sub image sensors, the generating of the plurality of original color-separated images comprises correcting positions of the original images.

30. The method of claim 28, further comprising generating a plurality of original color-separated images from the received color-separated images wherein when the obtained original color-separated images are not uniform in sensitivity, the generating of the plurality of original color-separated images comprises correcting sensitivity levels of the original images other than the original image having a lowest sensitivity level, based on the sensitivity of the original image having the lowest sensitivity level.

31. The method of claim 28, further comprising dividing the color filter into a first filtering area and a second filtering area according to a transmittance of a color coated thereon.

32. The method of claim 28, wherein each of the plurality of pixel groups includes a plurality of pixels corresponding to an arrangement pattern of the color filter.

33. The method of claim 31, wherein the pixel information comprises luminance information provided by the sub image sensor matching the first filtering area and color information provided by the sub image sensor matching the second filtering area.

34. A method of restoring a high pixel image in a camera module including a plurality of color lenses each including a color filter having a single color, and a plurality of sub image sensors corresponding to the plurality of color lenses, the method comprising:
obtaining a plurality of original color-separated images through each of the plurality of sub image sensors;
receiving the plurality of original color-separated images;
rearranging pixel information of pixels at identical positions at the plurality of original color-separated images provided from an original image generation module of the camera module and generating an intermediate image having a higher resolution than each of the original color-separated images; and
performing demosaicing on the intermediate image, performing deblurring on the demosaiced intermediate image, and generating a final image from the deblurred image.

35. The method of claim 34, further comprising concentrating light rays reflected from a predetermined object with the plurality of lenses at their designated positions or at positions of the lenses other than a predetermined lens among the plurality of lenses shifted a predetermined number of pixels based on a position of the predetermined lens.

36. The method of claim 34, wherein when the obtained original color-separated images are not aligned with the designated positions of the corresponding sub image sensors, the generating of the plurality of original color-separated images comprises correcting positions of the original images.

37. The method of claim 34, further comprising generating a plurality of original color-separated images from the received color-separated images, wherein when the obtained original color-separated images are not uniform in sensitivity, the generating of the plurality of original color-separated images comprises correcting sensitivity levels of the original images other than the original image having the lowest sensitivity level, based on the sensitivity of the original image having the lowest sensitivity level.

38. The method of claim 34, further comprising dividing each of the plurality of color lenses into a first lens area and a second lens area according to a transmittance of a color coated thereon, and the transmittance of the color coated on the second lens area is higher than the transmittance of the color coated on the first lens area.

39. A method of restoring a high pixel image in a camera module including a plurality of color lenses, and a plurality of sub image sensors corresponding to the plurality of color lenses, each having a single color, the method comprising:
obtaining a plurality of original color-separated images through the plurality of sub image sensors;
dividing the plurality of original color-separated images into a plurality of pixel groups;
mapping pixel information of pixels at identical positions in the plurality of original color-separated images divided into the plurality of pixel groups onto respective pixels of the pixel group corresponding to the identical positions and generating an intermediate image; and
recovering the intermediate image using a predetermined interpolation algorithm, performing deblurring on the interpolated intermediate image, and generating a final image.

40. The method of claim 39, further comprising generating a plurality of original color-separated images from the received color-separated images, wherein when the obtained original color-separated images are not aligned with the designated positions of the corresponding sub image sensors, the generating of the plurality of original color-separated images comprises correcting positions of the original images.

41. The method of claim 39, wherein when the obtained original color-separated images are not uniform in sensitivity, the generating of the plurality of original color-separated images comprises correcting sensitivity levels of the original images other than the original image having a lowest sensitivity level, based on the sensitivity of the original image having the lowest sensitivity level.

42. The method of claim 39, further comprising dividing each of the color lenses into a first lens area and a second lens area according to a transmittance of a color coated thereon, and the transmittance of the color coated on the second lens area is higher than the transmittance of the color coated on the first lens area.

43. The method of claim 39, wherein each of the plurality of pixel groups includes a plurality of pixels corresponding to an arrangement pattern of a color filter of the camera module.

44. The method of claim 42, wherein the pixel information comprises luminance information provided by the sub image sensor matching the first lens area and color information provided by the sub image sensor matching the second lens area.
